# EUROPÄISCHE PATENTSCHRIFT

(11) **EP 1 741 600 B1**
(45) Veröffentlichungstag und Bekanntmachung des Hinweises auf die Patenterteilung: **12.12.2007**
(21) Anmeldenummer: 06013431.9
(22) Anmeldetag: 29.06.2006
(51) Int. Cl.: B60R 5/04, B60R 21/06

(54) **Laderaumschutzvorrichtung für ein Kraftfahrzeug**
Protection device for a luggage compartment of a motor vehicle
Dispositif de protection pour un coffre d'un véhicule automobile

(30) Priorität: 08.07.2005 DE 10532470
(43) Veröffentlichungstag der Anmeldung: 10.01.2007
(73) Patentinhaber: BOS GmbH & Co. KG, 73760 Ostfildern (DE)
(72) Erfinder: Ehrenberger, Marina, 73760 Esslingen (DE); Walter, Herbert, 73061 Ebersbach (DE)
(74) Vertreter: Patentanwälte Ruff, Wilhelm, Beier, Dauster & Partner

(56) Entgegenhaltungen:
- EP-A- 0 754 594
- DE-A1- 3 922 450
- DE-A1- 10 307 228

## Beschreibung

Die Erfindung betrifft eine Laderaumschutzvorrichtung für ein Kraftfahrzeug mit einer Aufnahmeeinheit, in der wenigstens eine Wickelwelle zum Auf- und Abwickeln eines flexiblen Flächengebildes gelagert ist, und die Befestigungsmittel zum Sichern der Aufnahmeeinheit in einer fahrzeugfesten Funktionsposition in fahrzeugseitigen Halterungen umfasst.

Eine derartige Laderaumschutzvorrichtung ist für Kombi-Personenkraftwagen oder ähnliche Personenkraftwagen mit einem steil abfallenden Heck, die hinter einer Fontsitzbank einen zum Fahrgastraum hin offenen Laderaum aufweisen, allgemein bekannt. Derartige Laderaumschutzvorrichtungen weisen üblicherweise eine horizontal ausziehbare Laderaumabdeckung auf, die den Laderaum gegen Blicke von außen schützt. Ergänzend oder alternativ kann die Laderaumschutzvorrichtung ein vertikal ausziehbares Trennnetz umfassen. Zur Aufnahme des Trennnetzes und/oder der Laderaumabdeckung weist die Laderaumschutzvorrichtung ein Kassettengehäuse auf, das sich in Fahrzeugquerrichtung über wenigstens nahezu die gesamte Breite des Laderaumes erstreckt und in fahrzeugfesten Halterungen im Bereich von Seitenwandungen des Laderaumes laderaumfest positioniert ist. Das Kassettengehäuse kann aus den fahrzeugfesten Halterungen auch entnommen werden. Zum Fixieren und Lösen des Kassettengehäuses relativ zu den fahrzeugseitigen Halterungen sind Befestigungsmittel in Form von beweglichen Nocken oder Nasen vorgesehen, die vorzugsweise an gegenüberliegenden Stirnenden des Kassettengehäuses beweglich in dem Kassettengehäuse angeordnet sind. Die Befestigungsmittel in Verbindung mit den fahrzeugseitigen Halterungen sichern das Kassettengehäuse innerhalb des Laderaumes während eines normalen Fahrbetriebs. Bei Front- oder Heckaufprallbelastungen hingegen wird das Kassettengehäuse aus den Halterungen herausgerissen und im Fahrzeuginnenraum umhergeschleudert. Hierdurch können erhebliche Verletzungen der Fahrzeuginsassen auftreten.

Laderaumschutzvorrichtungen nach dem Oberbegriff des Anspruchs 1 sind z.B. aus der DE-A-3 922 450, DE-A-39225450, DE-A-10307228 und EP-A-0 754 594 bekannt.

Aufgabe der Erfindung ist es, eine Laderaumschutzvorrichtung der eingangs genannten Art zu schaffen, die einen sicheren Rückhalt der Laderaumschutzvorrichtung auch bei Frontal- oder Heckaufprallbelastungen des Kraftfahrzeugs ermöglicht.

Diese Aufgabe wird dadurch gelöst, dass wenigstens einem Befestigungsmittel wenigstens ein Sicherungsmittel zugeordnet ist, das zwischen einer das Befestigungsmittel in seiner Befestigungsstellung innerhalb der fahrzeugseitigen Halterung formschlüssig blockierenden Sperrstellung und einer außer Eingriff mit dem Befestigungsmittel befindlichen Ruhestellung derart beweglich gelagert ist, dass starke Fahrzeuglängsbeschleunigungen, insbesondere positive oder negative Beschleunigungen in Form eines Front- oder Heckaufpralls, zu einer Verlagerung des Sicherungsmittels in die Sperrstellung führen. Unter einer Aufnahmeeinheit im Sinne der Erfindung ist sowohl ein weitgehend geschlossenes Kassettengehäuse zu verstehen, aus dem wenigstens ein flexibles Flächengebilde durch einen entsprechenden Austrittsschlitz heraustritt, als auch Gehäuseseitenteile, die eine Wickelwelle und ein darauf gehaltenes Flächengebilde im Wesentlichen offen zwischen sich lagern. Durch die erfindungsgemäße Lösung wird die Aufnahmeeinheit bei einer entsprechenden Aufprallbelastung in ihrer Montageposition in fahrzeugseitigen Halterungen verriegelt, indem das wenigstens eine Befestigungsmittel durch das wenigstens eine Sicherungsmittel in seiner Befestigungsstellung blockiert wird. Erfindungsgemäß tritt diese zusätzliche Sicherung lediglich im Falle einer starken positiven oder negativen Beschleunigung, d.h. einer Beschleunigung oder einer Verzögerung auf, so dass während des normalen Fahrbetriebs oder während des Stillstandes des Kraftfahrzeugs eine einfache Entnahme der Aufnahmeeinheit aus den fahrzeugseitigen Halterungen ermöglicht ist. Das Sicherungsmittel ist vorzugsweise als mechanisch wirksames Blockierelement ausgeführt.

In Ausgestaltung der Erfindung ist das Sicherungsmittel in der Aufnahmeeinheit gelagert. Dadurch ist es möglich, die Sicherungsmittel kompakt innerhalb der Aufnahmeeinheit unterzubringen. Vorzugsweise ist das wenigstens eine Sicherungsmittel im Inneren des als Aufnahmeeinheit dienenden Kassettengehäuses beweglich gelagert und wirkt im Crashfall mit dem wenigstens einen Befestigungsmittel zusammen.

In weiterer Ausgestaltung der Erfindung ist das Sicherungsmittel wenigstens einer fahrzeugseitigen Halterung zugeordnet. Bei dieser Ausführungsform ist das Sicherungsmittel somit laderaumseitig, vorzugsweise im Bereich der wenigstens einen fahrzeugseitigen Halterung, beweglich gelagert. Vorzugsweise ist das wenigstens eine Sicherungsmittel somit in wenigstens einer der Seitenwandungen des Laderaumes integriert. Vorzugsweise ist die Lagerung des wenigstens einen Sicherungsmittels kraftübertragend mit einer Rohbaustruktur des Kraftfahrzeuges verbunden, um im Falle eines Fahrzeugaufpralls einen sicheren Rückhalt des wenigstens einen Befestigungsmittels in den fahrzeugseitigen Halterungen durch das wenigstens eine Sicherungsmittel zu ermöglichen.

In weiterer Ausgestaltung der Erfindung ist das Sicherungsmittel in zwei Abschnitte unterteilt, die in zueinander entgegengesetzten Bewegungsrichtungen alternativ in die Sperrstellung überführbar sind. Mittels dieser Ausgestaltung ist das Sicherungsmittel in einfacher Weise sowohl bei Frontalaufprallbelastungen als auch bei Heckaufprallbelastungen wirksam.

In weiterer Ausgestaltung der Erfindung ist das Sicherungsmittel exzentrisch zu seinem Massenschwerpunkt schwenkbeweglich gelagert, und die beiden Abschnitte sind spiegelsymmetrisch zu einer Lotachse des Sicherungsmittels ausgerichtet. Sobald daher das Sicherungsmittel aus der Senkrechten, nämlich der Lotachse, durch entsprechende Aufprallbelastungen in Fahrzeuglängsrichtung ausgelenkt wird, kann das Sicherungsmittel unabhängig davon, ob ein Heckaufprall und demzufolge eine starke Beschleunigung des Fahrzeugs oder ein Frontalaufprall und demzufolge eine starke Verzögerung des Fahrzeugs vorliegen, immer mit dem gleichen Stellweg in seine Sperrstellung überführt werden.

In weiterer Ausgestaltung der Erfindung ist das Sicherungsmittel linearbeweglich geführt. Das zugehörige Befestigungsmittel weist vorzugsweise einen entsprechenden Hinterschnitt auf, den das Sicherungsmittel in seiner Sperrstellung hintergreift und so eine Bewegung des Befestigungsmittels in Löserichtung verhindert. Bei einer linearbeweglichen Führung des Sicherungsmittels ist das Befestigungsmittel vorzugsweise mit einer in Fahrzeuglängsrichtung erstreckten Aufnahmenut versehen und das Sicherungsmittel ist fluchtend zu der Aufnahmenut in Fahrzeuglängsrichtung beweglich gelagert. Das Sicherungsmittel ist vorzugsweise joch- oder C-artig ausgeführt, wobei die so gebildeten beiden Schenkel des Sicherungsmittels die für die Sperrstellung maßgeblichen Abschnitte bilden. Diese Schenkel sind in normaler Betriebsposition, d.h. in Ruhestellung des Sicherungsmittels, auf gegenüberliegenden Seiten der Aufnahmenut außerhalb der normalen Bewegungsbahn des Befestigungsmittels positioniert. Hierzu kann das Sicherungsmittel durch Zentrierfedern in dieser Ruhestellung gehalten werden, deren Federkräfte zueinander im Gleichgewicht stehen und deren Federkräfte im Vergleich zu entsprechend wirkenden Aufprallkräften schwach ausgelegt sind. Bei einer entsprechenden Aufprallbelastung wird somit das Sicherungsmittel gegen die entsprechenden Federkräfte ausgelenkt und relativ zu der Aufnahmenut verschoben, so dass einer der beiden Schenkel in die Aufnahmenut eingreift und so eine Bewegung des Befestigungsmittels in Richtung seiner Lösestellung blockiert.

In weiterer Ausgestaltung der Erfindung sind dem Sicherungsmittel Endanschläge zugeordnet, die eine Verlagerung des Sicherungsmittels derart begrenzen, dass das Sicherungsmittel sich in der jeweiligen Endlage in seiner Sperrstellung befindet. Diese Endanschläge verhindern, dass das Sicherungsmittel sich bei einer entsprechenden Auslenkung durch die Sperrstellung hindurch in eine weitere Ruheposition verlagert.

In weiterer Ausgestaltung der Erfindung sind die Abschnitte des Sicherungsmittels nockenartig ausgeführt, und das wenigstens eine Befestigungsmittel weist eine in Bewegungsrichtung der Abschnitte des Sicherungsmittels verlaufende, korrespondierend nutartige Aussparung auf. Dadurch wird am Befestigungsmittel ein entsprechender Hinterschnitt geschaffen, um für die Sperrstellung einen Formschluss zwischen Sicherungsmittel und Befestigungsmittel zu gewährleisten.

Weitere Vorteile und Merkmale der Erfindung ergeben sich aus den Ansprüchen sowie aus der nachfolgenden Beschreibung eines bevorzugten Ausführungsbeispieles der Erfindung, das anhand der Zeichnungen dargestellt ist.
- Fig. 1: zeigt schematisch in einem teilweise aufgebrochenen Ausschnitt eine Ausführungsform einer erfindungsgemäßen Laderaumschutzvorrichtung in ihrer Befestigungsstellung relativ zu einer fahrzeugseitigen Halterung,
- Fig. 2: in einem vertikalen Längsschnitt die Laderaumschutzvorrichtung nach Fig. 1,
- Fig. 3 und 4: in einem Querschnitt auf Höhe der Schnittlinie III-III die Laderaumschutzvorrichtung nach Fig. 2 in zwei unterschiedlichen Positionen, wobei die Position nach Fig. 3 den Beginn einer Sperrstellung und die Position nach Fig. 4 die Ruhestellung der Laderaumschutzvorrichtung darstellen, und
- Fig. 5: in schematischer, perspektivischer Darstellung die Laderaumschutzvorrichtung nach Fig. 1 bis 4, unter Weglassung funktionsrelevanter Teile der Laderaumschutzvorrichtung.

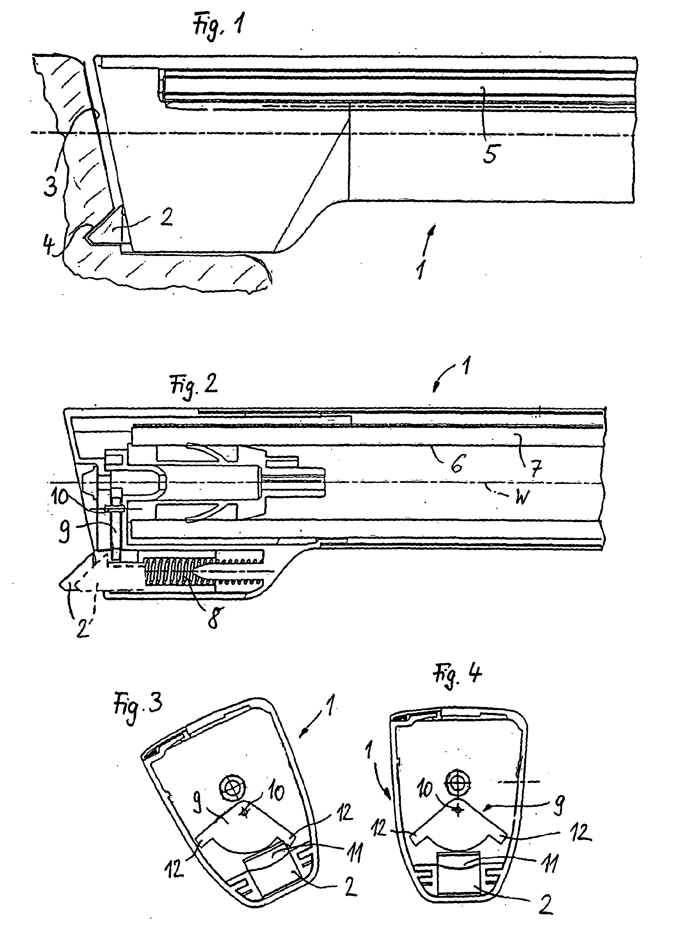

Eine Laderaumschutzvorrichtung nach den Figuren 1 bis 5 ist in Form einer horizontalen Laderaumabdeckung ausgeführt und weist ein Kassettengehäuse 1 auf, das sich in grundsätzlich bekannter Weise in seiner in dem Laderaum montierten Position in Fahrzeugquerrichtung knapp unterhalb einer Fahrzeugbordkante etwa über die Laderaumbreite erstreckt. Das Kassettengehäuse 1 ist vorzugsweise unmittelbar hinter einer ein- oder mehrteiligen Fondsitzbank des Fahrgastraumes positioniert, wobei der Laderaum oberhalb der Fondsitzbank offen in den Fahrgastraum übergeht. Das Kassettengehäuse 1 ist in fahrzeugseitige Halteaufnahmen 3 eingesetzt, die in gegenüberliegenden Seitenwandungsbereichen des Laderaumes vorgesehen sind, und gemäß dem dargestellten Ausführungsbeispiel als stufenartige Absätze ausgeführt sind, in die das Kassettengehäuse 1 von oben her eingesetzt und auf einer unteren Stützfläche des Stufenabsatzes aufgelegt werden kann. Um das Kassettengehäuse 1 in der eingesetzten Position fixieren zu können, ist in der fahrzeugseitigen Halteaufnahme 3 wenigstens eine Rastaussparung 4 vorgesehen, in die wenigstens eine Rastnase eines Befestigungsmittels 2 des Kassettengehäuses 1 eintauchen kann.

In dem Kassettengehäuse 1 ist in grundsätzlich bekannter Weise eine Wickelwelle 6 drehbeweglich gelagert, auf der ein flexibles Flächengebilde 7 auf- und abwickelbar befestigt ist. Das flexible Flächengebilde 7 weist an seinem in Auszugrichtung vorderen Stirnende eine Auszugleiste 5 auf, die sich formstabil über die gesamte Breite des flexiblen Flächengebildes 7 erstreckt. Die Wickelwelle 6 ist um eine sich in Längsrichtung des Kassettengehäuses 1 und damit in montiertem Zustand des Kassettengehäuses 1 in Fahrzeugquerrichtung erstreckende Wickelachse W drehbeweglich gelagert.

Das Kassettengehäuse 1 weist an seinen gegenüberliegenden Stirnendbereichen beim dargestellten Ausführungsbeispiel jeweils ein Befestigungsmittel 2 auf, wobei aus Übersichtlichkeitsgründen lediglich das eine Befestigungsmittel 2 der einen Stirnseite dargestellt ist. Das gegenüberliegende Befestigungsmittel 2 wie auch die zugehörige fahrzeugseitige Halteaufnahme und die entsprechende Rastaussparung der Halteaufnahme sind identisch ausgebildet, so dass auf die Darstellung und die zugehörige Beschreibung der Figuren 1 bis 5 auch für die gegenüberliegende Stirnseite des Kassettengehäuses 1 verwiesen werden kann.

In einem unteren Seitenabschnitt des Kassettengehäuses 1, der in Abstand unterhalb der Wickelwelle zu einem Stirnende des Kassettengehäuses 1 hin gewandt angeordnet ist, ist das Befestigungsmittel 2 in Form eines Rastschiebers parallel zur Wickelachse W linearbeweglich in dem Kassettengehäuse 1 geführt. Der Rastschieber 2 ist von der Mitte des Kassettengehäuses 1 weg parallel zur Wickelachse W seitlich nach außen durch eine wendelförmige Druckfeder 8 federbelastet, so dass er sich in seiner Ruheposition in seiner Blockierstellung gemäß den Figuren 1 und 2 befindet. Eine Rastnase des Rastschiebers 2 und eine korrespondierende Anlaufschräge der Rastaussparung 4 sind derart ausgeführt, dass bei starken Belastungen auf das Kassettengehäuse 1 nach oben der Rastschieber 2 gegen die Druckkraft der Druckfeder 8 nach innen gedrückt werden kann, wodurch das Kassettengehäuse 1 aus der Halteaufnahme 3 freikommt. Eine derartige Rückbewegung des Rastschiebers 2 nach innen ist in Fig. 2 gestrichelt dargestellt.

Um eine derartige Rückbewegung und demzufolge ein Lösen des Kassettengehäuses 1 bei Frontal- oder Heckaufprallbelastungen des Kraftfahrzeuges zu verhindern, ist dem Rastschieber 2 ein Sicherungsmittel 9 zugeordnet, das als Schwenknockenanordnung ausgeführt ist. Das Sicherungsmittel 9 ist oberhalb seines Massenschwerpunktes mittels eines Lagerstiftes 10 um eine zur Wickelachse W parallele Schwenkachse in dem Kassettengehäuse 1 schwenkbeweglich gelagert und weist eine scheibenartige Form nach Art eines Viertelkreises auf. An den gegenüberliegenden Flanken des Sicherungsmittels 9 ist jeweils ein Fortsatz in Form eines Nockenabschnittes 12 vorgesehen, der über die Viertelkreiskontur radial zur Schwenkachse des Lagerstiftes 10 hinausragt. Die Nockenabschnitte 12 sind soweit fortgesetzt, dass sie in die Bewegungsbahn des Rastschiebers 2 hineinragen. Der Rastschieber 2 weist auf Höhe des Sicherungsmittels 9 und damit insbesondere auf Höhe der Nockenabschnitte 12 eine nutartige Aussparung 11 auf, deren Grund korrespondierend zu dem Schwenkkreisbogen des Sicherungsmittels 9 eine kreisbogenförmige Kontur aufweist (in Figuren 3 und 4 erkennbar).

Das Sicherungsmittel 9 ist an dem Lagerstift 10 derart frei schwenkbeweglich gelagert, dass es massenträgheitsabhängig relativ zu dem Kassettengehäuse 1 gegenüber der Senkrechten und damit gegenüber der Lotachse auslenkbar ist. Hierzu weist das Sicherungsmittel 9 vorzugsweise ein relativ hohes Eigengewicht auf, so dass es aufgrund seiner exzentrischen Aufhängung und aufgrund seines vergleichsweise hohen Eigengewichtes durch entsprechende Massenträgheitskräfte relativ zu dem Rastschieber 2, der innerhalb des Kassettengehäuses 1 geführt ist, auslenkbar ist.

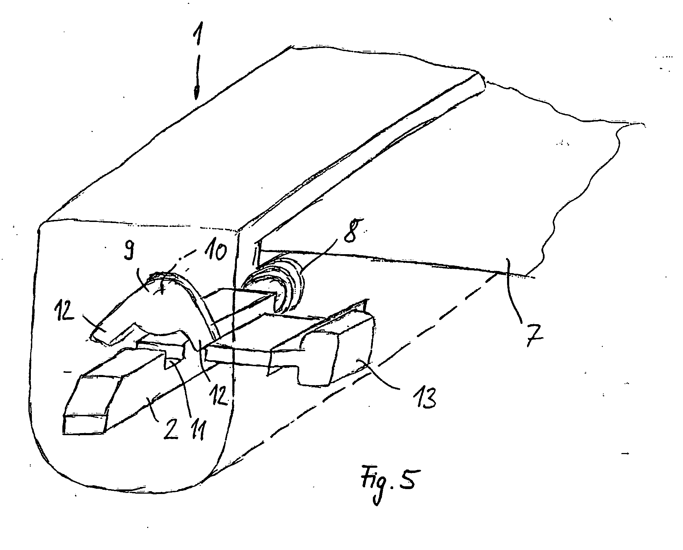

Anhand der Fig. 5 ist erkennbar, dass der Rastschieber 2 mittels eines aus dem Kassettengehäuse 1 herausragenden Schiebegriffes 13 manuell gegen die Druckkraft der Druckfeder 8 schiebebeweglich ist.

Bei einer entsprechenden Fahrzeugaufprallbelastung wird das Sicherungsmittel 9 aufgrund der auftretenden starken Verzögerung oder Beschleunigung in Fahrzeuglängsrichtung, abhängig von einem Front-oder Heckaufprall, zwangsläufig zu einer Seite ausgelenkt, wodurch einer der beiden Nockenabschnitte 12 in die nutartige Aussparung 11 eingeschwenkt wird und so eine Rückbewegung des Rastschiebers 2 aufgrund der zwischen der Anlaufschräge der Rastnase und der korrespondierenden Stützfläche der Rastaussparung 4 auftretenden Kräfte verhindert. Auch bei einer starken Schrägstellung des Kraftfahrzeuges infolge eines Fahrzeugaufpralls oder eines beginnenden Überschlages (Fig. 3) wird das Sicherungsmittel 9 in seine Sperrstellung überführt und sichert somit das Kassettengehäuse 1 gegen Lösen aus den fahrzeugseitigen Halteaufnahmen 3.

## Patentansprüche

1. Laderaumschutzvorrichtung für ein Kraftfahrzeug mit einer Aufnahmeeinheit, in der wenigstens eine Wickelwelle zum Auf- oder Abwickeln eines flexiblen Flächengebildes gelagert ist, und die Befestigungsmittel zum Sichern der Aufnahmeeinheit in einer fahrzeugfesten Funktionsposition in fahrzeugseitigen Halterungen umfasst, **dadurch gekennzeichnet, dass** wenigstens einem Befestigungsmittel (2) wenigstens ein Sicherungsmittel (9) zugeordnet ist, das zwischen einer das Befestigungsmittel (2) in seiner Befestigungsstellung innerhalb der fahrzeugseitigen Halterung (3, 4) formschlüssig blockierenden Sperrstellung und einer außer Eingriff mit dem Befestigungsmittel (2) befindlichen Ruhestellung in Fahrzeuglängsrichtung derart beweglich gelagert ist, dass starke Fahrzeuglängsbeschleunigungen, insbesondere positive oder negative Beschleunigungen in Form eines Front- oder Heckaufpralls, zu einer Verlagerung des Sicherungsmittels (9) in die Sperrstellung führen.

2. Laderaumschutzvorrichtung nach Anspruch 1, **dadurch gekennzeichnet, dass** das Sicherungsmittel (9) in der Aufnahmeeinheit (1) gelagert ist.

3. Laderaumschutzvorrichtung nach Anspruch 1, **dadurch gekennzeichnet, dass** das Sicherungsmittel (9) wenigstens einer fahrzeugseitigen Halterung zugeordnet ist.

4. Laderaumschutzvorrichtung nach Anspruch 1, **dadurch gekennzeichnet, dass** das Sicherungsmittel (9) in zwei Abschnitte (12) unterteilt ist, die in zueinander entgegengesetzten Bewegungsrichtungen alternativ in die Sperrstellung überführbar sind.

5. Laderaumschutzvorrichtung nach Anspruch 4, **dadurch gekennzeichnet, dass** das Sicherungsmittel (9) exzentrisch zu seinem Massenschwerpunkt schwenkbeweglich gelagert ist, und dass die beiden Abschnitte (12) spiegelsymmetrisch zu einer Lotachse des Sicherungsmittels (9) ausgerichtet sind.

6. Laderaumschutzvorrichtung nach einem der Ansprüche 1 bis 4, **dadurch gekennzeichnet, dass** das Sicherungsmittel (9) linearbeweglich geführt ist.

7. Laderaumschutzvorrichtung nach Anspruch 1, **dadurch gekennzeichnet, dass** dem Sicherungsmittel (9) Endanschläge zugeordnet sind, die eine Verlagerung des Sicherungsmittels (9) derart begrenzen, dass das Sicherungsmittel (9) sich in der jeweiligen Endlage in seiner Sperrstellung befindet.

8. Laderaumschutzvorrichtung nach Anspruch 4, **dadurch gekennzeichnet, dass** die Abschnitte (12) des Sicherungsmittels (9) nockenartig ausgeführt sind, und dass das wenigstens eine Befestigungsmittel (2) eine in Bewegungsrichtung der Abschnitte (12) des Sicherungsmittels (9) verlaufende, korrespondierend nutartige Aussparung (11) aufweist.

## Claims

1. Loading-space protection device for a motor vehicle, having a holding unit, in which at least one winding shaft for winding or unwinding a flexible sheet-like structure is mounted, and which comprises fastening means for securing the holding unit in a functional position, fixed to the vehicle, in mounts on the vehicle, **characterised in that** there is assigned to at least one fastening means (2) at least one securing means (9) which is mounted movably in the longitudinal direction of the vehicle between a blocking position, which blocks the fastening means (2) in its fastening position within the mount (3, 4) on the vehicle in an interlocking manner, and a rest position, which is disengaged from the fastening means (2), in such a manner that severe longitudinal accelerations of the vehicle, in particular positive or negative accelerations in the form of a front-end or rear-end impact, lead to the securing means (9) being displaced into the blocking position.

2. Loading-space protection device according to claim 1, **characterised in that** the securing means (9) is mounted in the holding unit (1).

3. Loading-space protection device according to claim 1, **characterised in that** the securing means (9) is assigned to at least one mount on the vehicle.

4. Loading-space protection device according to claim 1, **characterised in that** the securing means (9) is divided into two portions (12) which can be transferred alternately, in mutually opposing directions of movement, into the blocking position.

5. Loading-space protection device according to claim 4, **characterised in that** the securing means (9) is mounted so as to be able to pivot eccentrically relative to its mass centre of gravity, and **in that** the two portions (12) are aligned in a mirror-symmetrical manner relative to a vertical axis of the securing means (9).

6. Loading-space protection device according to any one of claims 1 to 4, **characterised in that** the securing means (9) is guided in a linearly movable manner.

7. Loading-space protection device according to claim 1, **characterised in that** there are assigned to the securing means (9) end stops which limit a displacement of the securing means (9) in such a manner that the securing means (9) is in its blocking position in the respective end position.

8. Loading-space protection device according to claim 4, **characterised in that** the portions (12) of the securing means (9) are of cam-like design, and **in that** the at least one fastening means (2) has a correspondingly groove-like cutout (11) extending in the direction of movement of the portions (12) of the securing means (9).

## Revendications

1. Dispositif de protection de coffre pour un véhicule automobile comprenant une unité de rangement dans laquelle est logée au moins une bobine pour enrouler et dérouler une bâche, et qui comprend des moyens de fixation pour bloquer l'unité de rangement dans une position fonctionnelle sur le véhicule dans des supports solidaires du véhicule, **caractérisé en ce qu'**à au moins un moyen de fixation (2) au moins un moyen de blocage (9) est associé qui est logé mobile dans la direction longitudinale du véhicule entre une position d'arrêt bloquant le moyen de fixation (2) par complémentarité de formes dans sa position de fixation à l'intérieur du support (3, 4) solidaire du véhicule et une position située hors engagement avec le moyen de fixation (2), de sorte que des accélérations longitudinales importantes du véhicule, en particulier des accélérations positives ou négatives en forme d'un impact frontal ou arrière, conduisent à un déplacement du moyen de blocage (9) dans la position d'arrêt.

2. Dispositif de protection de coffre selon la revendication 1, **caractérisé en ce que** le moyen de blocage (9) est logé dans l'unité de rangement (1).

3. Dispositif de protection de coffre selon la revendication 1, **caractérisé en ce que** le moyen de blocage (9) est associé à au moins un support solidaire du véhicule.

4. Dispositif de protection de coffre selon la revendication 1, **caractérisé en ce que** le moyen de blocage (9) est divisé en deux segments (12) que l'on peut transférer dans la position d'arrêt alternativement dans des directions de mouvement opposées.

5. Dispositif de protection de coffre selon la revendication 4, **caractérisé en ce que** le moyen de blocage (9) est logé en pivotement de façon excentrée par rapport à son centre de gravité de masse, et les deux segments (12) sont orientés symétriquement à l'inverse par rapport à un axe perpendiculaire du moyen de blocage (9).

6. Dispositif de protection de coffre selon l'une quelconque des revendications 1 à 4, **caractérisé en ce que** le moyen de blocage (9) est mobile linéairement.

7. Dispositif de protection de coffre selon la revendication 1, **caractérisé en ce qu'**au moyen de blocage (9) des butées d'extrémité sont associées qui limitent un déplacement du moyen de blocage (9) de sorte que le moyen de blocage (9) se trouve dans sa position d'arrêt dans la position d'extrémité respective.

8. Dispositif de protection de coffre selon la revendication 4, **caractérisé en ce que** les segments (12) du moyen de blocage (9) présentent la forme de cames, et au moins un moyen de fixation (2) présente un évidement (11) en forme de rainure correspondant s'étendant dans la direction du mouvement des segments (12) du moyen de blocage (9).
